# EUROPEAN PATENT SPECIFICATION

(11) **EP 1 668 721 B1**
(45) Date of publication and mention of the grant of the patent: **07.07.2010**
(21) Application number: 04772415.8
(22) Date of filing: 24.08.2004
(51) Int. Cl.: H01M 2/16, H01M 6/08

(54) **ALKALINE DRY BATTERY**
ALKALIN-TROCKENBATTERIE
PILE ALCALINE SECHE

(30) Priority: 27.08.2003 JP 2003302681
(43) Date of publication of application: 14.06.2006
(73) Proprietor: Panasonic Corporation, Kadoma-shi Osaka 571-8501 (JP)
(72) Inventor: ADACHI, Mitsuji, Chuo-ku, Osaka 540-6319 (JP); FUJIWARA, Shuji, Chuo-ku, Osaka 540-6319 (JP); OKUBO, Takeshi, Chuo-ku, Osaka 540-6319 (JP)
(74) Representative: Price, Paul Anthony King
(86) International application number: PCT/JP2004/012459
(87) International publication number: WO 2005/022673

(56) References cited:
- WO-A-99/60636
- US-A- 5 789 102
- US-A- 6 099 987
- PATENT ABSTRACTS OF JAPAN vol. 1999, no. 03, 31 March 1999 (1999-03-31) & JP 10 334878 A (MATSUSHITA ELECTRIC IND CO LTD), 18 December 1998 (1998-12-18)

## Description

### Technical Field

The present invention relates to an alkaline dry battery, and more specifically to the structure of a separator for separating a positive electrode material mixture from a gel negative electrode in an alkaline dry battery.

### Background Art

Attempts have been made to enhance the structure of a bottomed cylindrical separator comprising a cylindrical separator and a bottom separator (bottom paper) in order to improve the separatability of separator and the discharge performance of battery.

For example, Japanese Laid-Open Patent Publication No. Hei 10-334878 proposes to provide a rising part around a bottom paper and in an upright position along the inside of a cylindrical separator. When a vibration or impact is applied to the battery, however, the bottom paper may be distorted or displaced as a gel negative electrode flows, during which a gap is created between the cylindrical separator and the bottom paper to allow the gel negative electrode to leak out to the outside, specifically, to the battery case which also functions as a positive electrode terminal from the gap, causing an internal short-circuit.

Japanese Laid-Open Patent Publication No. Hei 11-329396 proposes to provide a rising part around a bottom paper and in an upright position along the outside of a cylindrical separator. However, since the rising part is located outside the cylindrical separator, there is force to push the side face of the cylindrical separator to the inside, which may cause the cylindrical separator to bend inward. At this time, the distance between the positive electrode material mixture and the gel negative electrode is widened to increase the battery's internal resistance, which degrades the discharge performance. Such phenomenon is more likely to occur as the battery size is increased.

US-A-6,099,987 discloses a cylindrical electrochemical cell with a cup seal for the separator, comprising first and second bottom papers sandwiching the end of a cylindrical separator therebetween. This structure, however does not take into account a short circuit and an increase of internal resistance prevention.

In order to solve the problems described above, the present invention is intended to provide a highly reliable alkaline dry battery with excellent discharge performance by improving a structure of a bottom separator.

### Disclose of Invention

An alkaline dry battery of the present invention comprises: a battery case; a hollow cylindrical positive electrode material mixture being attached to the inside of the battery case; a cylindrical separator disposed inside the positive electrode material mixture; a bottom separator disposed at one end of the cylindrical separator; and a gel negative electrode filled inside the cylindrical separator and the bottom separator. The bottom separator comprises a first bottom paper and a second bottom paper laminated to the outside of the first bottom paper. The first bottom paper has a first bottom part and a first rising part which is placed around the first bottom part and upright along the inside of the cylindrical separator. The second bottom paper has a second bottom part and a second rising part which is placed around the second bottom part and upright along the outside of the cylindrical separator. The first rising part and the second rising part sandwich the end of the cylindrical separator therebetween. The first rising part has a height of 1 to 5 mm, and the second rising part has a height of 3 to 10 mm.

The second bottom paper preferably comprises a plurality of layers.

At least one of the plurality of layers is a thin film made of regenerated cellulose.

The bottom separator is preferably thinner than the cylindrical separator.

### Brief Description of Drawings

FIG. 1 is an elevation partly in section of an alkaline dry battery of Example 1 of the present invention.
FIG. 2 is a drawing showing an insertion process of a cylindrical separator and a second bottom paper into a hollow of a positive electrode material mixture.
FIG. 3 is a drawing showing an insertion process of a first bottom paper into an inside of a cylindrical separator.
FIG. 4 is an elevation partly in section of a conventional alkaline dry battery of Comparative Example 1.
FIG. 5 is an elevation partly in section of a conventional alkaline dry battery of Comparative Example 2.

### Best Mode for Carrying Out the Invention

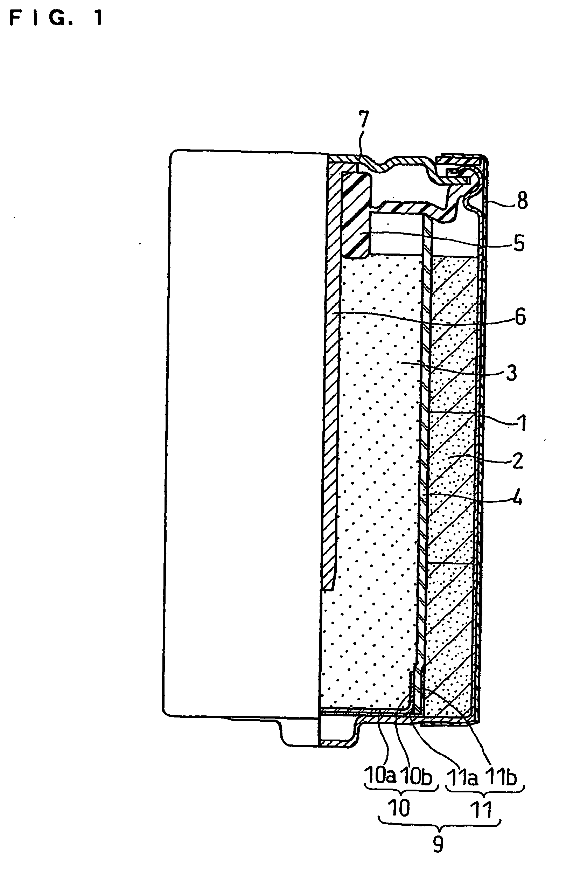

In the following, a description will be given of an embodiment of an alkaline dry battery of the present invention referring to FIG. 1. FIG. 1 is an elevation partly in section of a cylindrical alkaline dry battery.

In a bottomed cylindrical battery case 1 having a dent in the center of the bottom thereof which also serves as a positive electrode terminal, a hollow cylindrical positive electrode material mixture 2 is disposed, and a gel negative electrode 3 is filled inside the positive electrode material mixture 2 with a separator interposed therebetween.

The positive electrode material mixture 2 is, for example, prepared by mixing manganese dioxide as a positive electrode active material, graphite as a conductive material and an aqueous solution of sodium hydroxide as an alkaline electrolyte at a given weight ratio.

The gel negative electrode 3 is, for example, prepared by mixing zinc powders as a negative electrode active material, sodium polyacrylate as a gelling agent and an aqueous solution of sodium hydroxide as an alkaline electrolyte at a given weight ratio.

The separator comprises a cylindrical separator 4 and a bottom separator 9 and separates the positive electrode material mixture 2 from the gel negative electrode 3. The bottom separator 9 comprises a first bottom paper 10 and a second bottom paper 11 laminated to the outside of the first bottom paper 10.

The first bottom paper 10 has a first bottom part 10a positioned at the bottom of the cylindrical separator 4 and a first rising part 10b which is placed around the first bottom part 10a and upright along the inside of the cylindrical separator 4. The second bottom paper 11 has a second bottom part 11a positioned at the bottom of the cylindrical separator 4 and a second rising part 11b which is placed around the second bottom part 11a and upright along the outside of the cylindrical separator 4. The end of the cylindrical separator 4 is sandwiched by the first rising part 10b and the second rising part 11b. The first bottom part 10a is preferably in contact with the second bottom part 11a, thereby increasing the capacity for the gel negative electrode 3.

Even if the rising part 11b of the second bottom paper 11 causes the end of the cylindrical separator 4 to bend inward, the rising part 10b of the first bottom paper 10 prevents the bending so that the cylindrical separator 4 is maintained in an upright position. As described above, the cylindrical separator 4 does not bend inward and therefore it is possible to prevent the decrease in discharge performance resulting from the increase of the distance between the positive electrode material mixture 2 and the gel negative electrode 3 and from the increase of the internal resistance of the battery.

Moreover, even if a vibration or impact is applied to the alkaline dry battery, the leaking of the gel negative electrode 3 due to displacement of the first bottom paper 10 can be prevented because the first bottom paper 10 is supported from the outside by the second bottom paper 11. This prevents internal short-circuiting which occurs from the contact of the gel negative electrode 3 with the battery case 1 due to the leaking of the gel negative electrode 3 to the battery case 1.

As the cylindrical separator 4, for example, a non-woven fabric made by mixing mainly polyvinyl alcohol fiber and rayon fiber is used.

As the first bottom paper 10, for example, a synthetic fiber of polyvinyl alcohol or the like, or Kraft paper is used.

As the second bottom paper 11, a microporous film that allows only ions to pass through is used. For example, a laminate produced by laminating a non-woven fabric made of synthetic fiber of polyvinyl alcohol on each surface of a microporous thin film made of regenerated cellulose is used.

The bottom separator 9 is preferably thinner than the cylindrical separator 4 because the amount of the gel negative electrode 3 can be increased.

It is preferred that the second bottom paper 11 comprises a plurality of layers and at least one of the plurality of layers is a thin film made of regenerated cellulose. Internal short-circuiting does not occur because the thin film of regenerated cellulose prevents dendrites, which are a reaction product, from piercing the bottom paper.

A negative electrode current collector 6 integrated with a gasket 5 and a bottom plate 7 which also serves as a negative electrode terminal is inserted in the center of the gel negative electrode 3. The opening of the battery case 1 is sealed with the bottom plate 7 with the edge of the opening of the battery case 1 crimping onto the periphery of the bottom plate 7 with the gasket 5 therebetween. The outer surface of the battery case 1 is covered with an outer label 8.

An example of the present invention will be described below in detail, but it should be understood that the present invention is not limited thereto.

### Example 1

An alkaline dry battery having a structure similar to the battery of FIG. 1 was produced in the following procedure.

Manganese dioxide as a positive electrode active material and graphite as a conductive material were mixed at a weight ratio of 90:10. The mixture was then mixed with an aqueous solution of 40wt% sodium hydroxide as an electrolyte at a weight ratio of 100:3, which was then thoroughly stirred and compressed into flakes. The positive electrode material mixture flakes were ground into granules, which were then sieved to 10 to 100 mesh. The 10 to 100 mesh granules were pressed into a hollow cylinder to give pellets of positive electrode material mixture 2.

Three pellets of positive electrode material mixture 2 were inserted into a battery case 1. With the use of a pressing jig, the positive electrode material mixture 2 was remolded such that the positive electrode material mixture 2 was attached to the inner wall of the battery case 1.

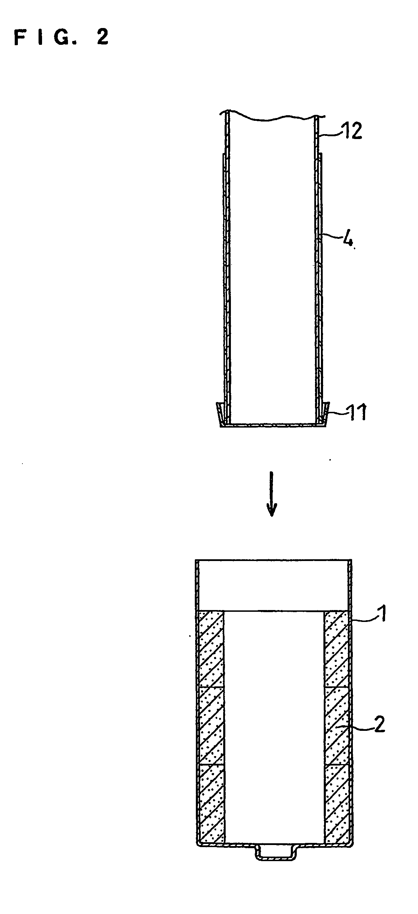

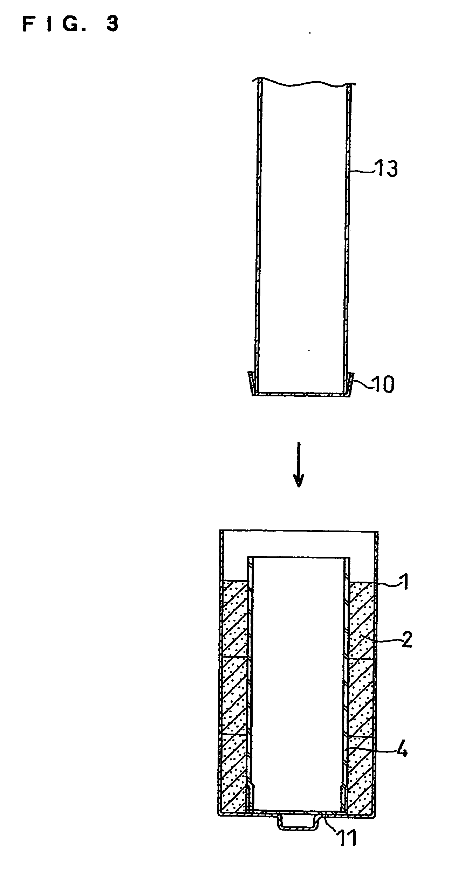

As shown in FIG. 2, with the use of a cylindrical jig 12, a laminate formed by laminating two 0.25 mm-thick non-woven fabrics made by mixing mainly polyvinyl alcohol fiber and rayon fiber was double-wound to give a cylindrical separator 4 with a thickness of 1.0 mm. A second bottom paper 11 was placed on the tip of the jig with the cylindrical separator 4 wound therearound. The second bottom paper 11 and the cylindrical separator 4 were inserted into the hollow of the positive electrode material mixture 2 such that the second bottom paper 11 covered the end of the cylindrical separator 4. Thereby, the cylindrical separator 4 was attached to the inner wall of the positive electrode material mixture 2, and in the bottom of the battery case 1 was disposed the second bottom paper 11 having a second bottom part 11a positioned at the bottom of the cylindrical separator 4 and a second rising part 11b which was placed around the second bottom part 11a and upright along the outside of the cylindrical separator 4. Further, a first bottom paper 10 was placed on the tip of a cylindrical jig 13, which was then inserted into the inside of the cylindrical separator 4, as shown in FIG. 3. The jig 13 had a sightly smaller diameter than the jig 12. Thereby, the first bottom paper 10 having a first bottom part 10a positioned at the bottom of the cylindrical separator 4 and a first rising part 10b which was placed around the first bottom part 10a and upright along the inside of the cylindrical separator 4 was disposed. At this time, it was disposed such that the first bottom part 10a was in contact with the second bottom part 11a. The first rising part 10b had a height of 1-5 mm and the second rising part 11b had a height of 3-10 mm.

In the manner just described, the bottom separator 9 was constructed by the first bottom paper 10 and the second bottom paper 11.

The second bottom paper 11 was prepared by cutting base paper with a thickness of 0.2 mm obtained by laminating a non-woven fabric made of polyvinyl alcohol fiber on each surface of a thin film made of regenerated cellulose into squares with sides longer than the outer diameter of the cylindrical separator 4.

The first bottom paper 10 was prepared by cutting a non-woven fabric with a thickness of about 0.5 mm made mainly of polyvinyl alcohol fiber into squares with sides longer than the inside diameter of the cylindrical separator 4.

Into the bottomed cylindrical separator comprising the cylindrical separator 4 and the bottom separator 9 placed as described above was injected a given amount of the aqueous solution of 40wt% sodium hydroxide as an alkaline electrolyte. After a specified length of time, a gel negative electrode 3 was then introduced into the inside of the separator. The gel negative electrode 3 was prepared by mixing sodium polyacrylate as a gelling agent, the aqueous solution of 40wt% sodium hydroxide as an alkaline electrolyte and zinc powders as a negative electrode active material at a weight ratio of 1:33:66.

The negative electrode current collector 6 was inserted in the center of the gel negative electrode 3. The negative electrode current collector 6 was integrated with a gasket 5 and a bottom plate 7 which also served as a negative electrode terminal. The opening of the battery case 1 was sealed with the bottom plate 7 with the edge of the opening of the battery case 1 crimping onto the periphery of the bottom plate 7 with the gasket 5 therebetween. The outer surface of the battery case 1 was covered with an outer label 8 to give a D size alkaline dry battery.

### Comparative Example 1

With the use of a certain cylindrical jig, a cylindrical separator 4 similar to the one in Example 1 was obtained. The cylindrical separator 4 was inserted into the hollow of a positive electrode material mixture 2 disposed in a battery case 1. Then, a bottom paper 19 similar to the first bottom paper 10 of Example 1 was placed on the tip of the jig. This was then inserted into the inside of the cylindrical separator 4, and the bottom paper 19 having a rising part 19a placed upright along the inside of the cylindrical separator 4 was placed, whereby a bottom separator was formed.

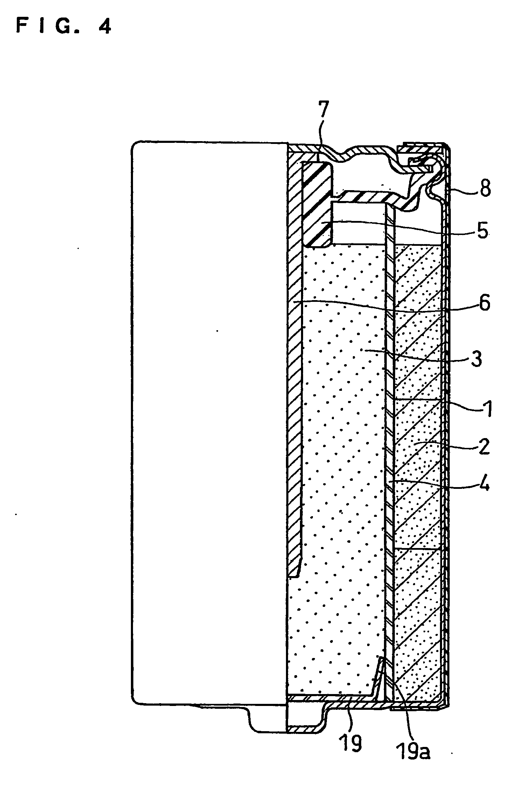

A D size alkaline dry battery having a structure shown in FIG. 4 was produced in the same manner as in Example 1 except that the bottom paper 19 was used to form the bottom separator in the above-described manner.

### Comparative Example 2

With the use of a certain cylindrical jig, a cylindrical separator 4 similar to the one in Example 1 was obtained. A bottom paper 29 similar to the second bottom paper 11 of Example 1 was placed on the tip of the jig with the cylindrical separator 4 wound therearound. The bottom paper 29 and the cylindrical separator 4 were inserted into the hollow of a positive electrode material mixture 2 disposed in a battery case 1 such that the bottom paper 29 covered the end of the cylindrical separator 4. Thereby, the cylindrical separator 4 and the bottom paper 29 having a rising part 29a placed upright along the outside of the cylindrical separator 4 were disposed inside the positive electrode material mixture 2.

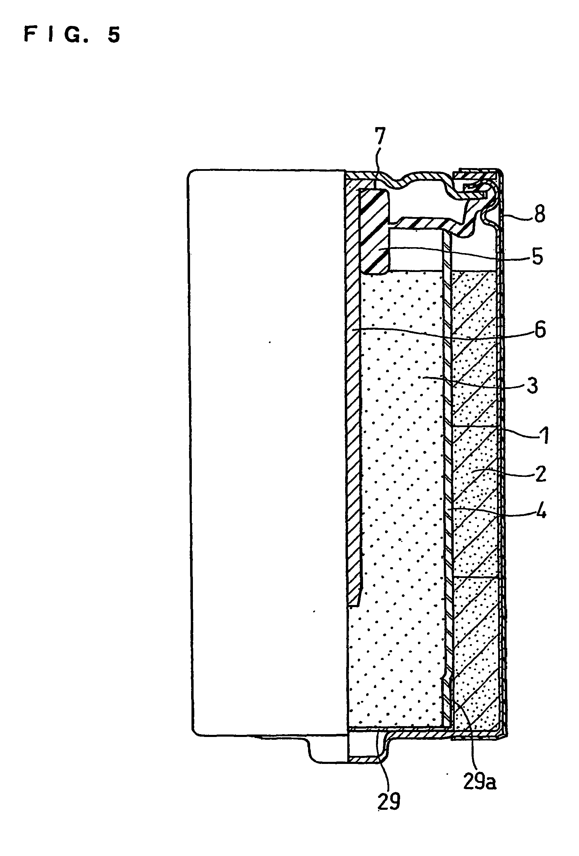

A D size alkaline dry battery having a structure shown in FIG. 5 was produced in the same manner as in Example 1 except that the bottom paper 29 was used to form a bottom separator in the above-described manner.

The following evaluation tests were done using one hundred each of three different batteries of Example 1 and Comparative Examples 1 and 2.

### [Evaluation]

### (1) Vibration Test

The voltage of the battery was first measured in an atmosphere of 20°C, and the battery was subjected to JIS vibration test (JIS C 0036) for three minutes with the negative electrode terminal side (bottom plate) on top. The vibration test was done with a frequency of 1 to 100 Hz, an acceleration spectral density of 1.0 (m/s²)²/Hz and a flat acceleration spectral density curve. One hour after the completion of the vibration test, the voltage of the battery was again measured in an atmosphere of 20°C. Then, the number of batteries with a decreased voltage of not less than 2 mV after the test was checked. The results are shown in Table 1.

**Table 1**

| | Number of batteries with a decreased voltage of not less than 2 mV |
|---|---|
| Comparative Example 1 | 65 |
| Comparative Example 2 | 2 |
| Example 1 | 0 |

| | |
|---|---|
| * Out of 100 batteries tested. | |

In many of the batteries of Comparative Example 1, the bottom paper 19 was displaced by the vibration to allow the gel negative electrode 3 to leak and contact the battery case 1 which also functioned as the positive electrode terminal, thereby causing internal short-circuiting to greatly decrease the voltage. As for those of Comparative Example 2, a very slight number of the batteries had a greatly decreased voltage. In the batteries with a greatly decreased voltage, although the displacement of the bottom paper due to the vibration was not observed, a small amount of the gel negative electrode 3 was present in the gap between the cylindrical separator 4 and the bottom paper 29, which contacted the positive electrode material mixture 2 to cause short-circuiting.

In the batteries of Example 1, on the other hand, three parts, i.e., the first bottom paper 10, the second bottom paper 11 and the cylindrical separator 4, were fixed by the force applied to the inside of the cylindrical separator 4 by the rising part 11b of the second bottom paper 11 and the one applied to the outside of the cylindrical separator 4 by the rising part 10b of the first bottom paper 10. Accordingly, even when the vibration was applied, the gel negative electrode 3 did not leak to the outside of the cylindrical separator 4 and the bottom separator 9 so that the batteries with a greatly decreased voltage were not observed at all.

### (2) Measurement of Internal Resistance

The battery was stored in an atmosphere of 20°C for a week with the positive electrode terminal side on top. Then, the internal resistance of the battery after storage was measured by an alternating current resistance meter. The results are shown in Table 2.

**Table 2**

| | | Comp. Ex. 2 | Ex. 1 |
|---|---|---|---|
| Resistance value (Ω) | Average value | 0.069 | 0.055 |
| | Maximum value | 0.107 | 0.067 |
| | Minimum value | 0.050 | 0.053 |
| | Difference between max. and min. values | 0.057 | 0.014 |
| Number of batteries | Not less than 110 mΩ to less than 120 mΩ | 0 | 0 |
| | Not less than 100 mΩ to less than 110 mΩ | 2 | 0 |
| | Not less than 90 mΩ to less than 100 mΩ | 3 | 0 |
| | Not less than 80 mΩ to less than 90 mΩ | 5 | 0 |
| | Not less than 70 mΩ to less than 80 mΩ | 15 | 0 |
| | Not less than 60 mΩ to less than 70 mΩ | 50 | 52 |
| | Not less than 50 mΩ to less than 60 mΩ | 25 | 48 |
| | Not less than 40 mΩ to less than 50 mΩ | 0 | 0 |

| | | | |
|---|---|---|---|
| * Out of 100 batteries tested. | | | |

In Comparative Example 2, batteries with a high internal resistance value were observed. Presumably, this is because the positive electrode terminal-side end of the cylindrical separator 4 bent inward to widen the distance between the positive electrode material mixture 2 and the gel negative electrode 3.

In Example 1, on the other hand, the first bottom paper 10 prevented the end of the cylindrical separator 4 from bending inward so that the internal resistance was small and its variation was also small. This has proved that highly reliable battery can be obtained in Example 1.

### (3) Discharge Test

The battery was stored in an atmosphere of 20°C for a week with the positive electrode terminal side on top. Then, the battery was continuously discharged at a constant current of 1500 mA in an atmosphere of 20°C. During the discharge, the discharge duration time for which the voltage fell below 0.9 V was measured. The results are shown in Table 3.

**Table 3**

| | Discharge duration time (min.) | | | |
|---|---|---|---|---|
| | Average value | Maximum value | Minimum value | Difference between max. and min. values |
| Comp. Ex. 2 | 218 | 237 | 160 | 77 |
| Ex. 1 | 225 | 237 | 205 | 32 |

| | | | | |
|---|---|---|---|---|
| * Out of 100 batteries tested. | | | | |

It is evident that the difference between the maximum and minimum values of the discharge duration time and the variation in discharge performance for batteries of Example 1 were smaller than those for batteries of Comparative Example 2. In many of the batteries of Comparative Example 2, the end of the cylindrical separator 4 bent inward after storage for a week in the manner described above and the internal resistance increased. Presumably, this caused the variation in internal resistance, which increased the variation in discharge performance. In the batteries of Example 1, on the other hand, it is presumed that the first bottom paper 10 prevented the end of the cylindrical separator 4 from bending inward so that the variation in internal resistance was small and the variation in discharge performance was also small.

### Industrial Applicability

As described above, the present invention can provide a highly reliable alkaline dry battery with excellent discharge performance by fixing the bottom-side end of a cylindrical separator and using a bottom separator that does not move even when a vibration or impact is applied to the alkaline dry battery.

## Claims

1. An alkaline dry battery comprising:
a Battery case (1);
a hollow cylindrical positive electrode material mixture (2) being attached to the inside of said battery case (1);
a cylindrical separator (4) disposed inside said positive electrode material mixture (2);
a bottom separator (9) disposed at one end of said cylindrical separator (4); and
a gel negative electrode (3) filled inside said cylindrical separator (4) and said bottom separator (9);
wherein said bottom separator (9) comprises a first bottom paper (10) and a second bottom paper (11) laminated to the outside of said first bottom paper (10),
said first-bottom paper (10) has a first bottom part (10a) and a first rising part (10b) which is placed around said first bottom part (10a) and upright along the inside of said cylindrical separator (4),
said second bottom paper (11) has a second bottom part (11a) and a second rising part (11b) which is placed around said second bottom part (11a) and upright along the outside of said cylindrical separator (4), and
said first rising part (10b) and said second rising part (11b) sandwich the end of said cylindrical separator (4) therebetween;
**characterised in that** said first rising part (10b) has a height of 1 to 5 mm, and said second rising part (11b) has a height of 3 to 10 mm.

2. The alkaline dry battery in accordance with claim 1, wherein said second bottom paper (11) comprises a plurality of layers.

3. The alkaline dry battery in accordance with claim 2, wherein at least one of said plurality of layers is a thin film made of regenerated cellulose.

4. The alkaline dry battery in accordance with any preceding claim, wherein said bottom separator (9) is thinner than said cylindrical separator (4).

5. The alkaline dry battery in accordance with any preceding claim, wherein the battery size is D size.

## Patentansprüche

1. Alkalische Trockenbatterie mit:
einem Batteriegehäuse (1);
einem hohlen zylindrischen Positivelektrodenmaterialgemisch (2), das an der Innenseite des Batteriegehäuses (1) angebracht ist;
einem zylindrischen Separator (4), der innerhalb des Positivelektrodenmaterialgemischs (2) angeordnet ist;
einem unteren Separator (9), der an einem Ende des zylindrischen Separators (4) angeordnet ist; und
einer gelartigen negativen Elektrode (3), die in den zylindrischen Separator (4) und den unteren Separator (9) eingefüllt ist;
wobei der untere Separator (9) ein erstes unteres Papier (10) und ein zweites unteres Papier (11) aufweist, das auf die Außenseite des ersten unteren Papiers (10) geschichtet ist,
wobei das erste untere Papier (10) einen ersten unteren Teil (10a) und einen ersten sich erhebenden Teil (10b) aufweist, der um den ersten unteren Teil (10a) herum platziert ist und aufrecht entlang der Innenseite des zylindrischen Separators (4) ist,
wobei das zweite untere Papier (11) einen zweiten unteren Teil (11a) und einen zweiten sich erhebenden Teil (11b) aufweist, der um den zweiten unteren Teil (11a) herum platziert ist und aufrecht entlang der Außenseite des zylindrischen Separators (4) ist, und
wobei der erste sich erhebende Teil (10b) und der zweite sich erhebende Teil (11b) das Ende des zylindrischen Separators (4) zwischen sich eingefügt haben,
**dadurch gekennzeichnet, dass**
der erste sich erhebende Teil (10b) eine Höhe von 1 bis 5 mm und der zweite sich erhebende Teil (11b) eine Höhe von 3 bis 10 mm aufweist.

2. Alkalische Trockenbatterie gemäß Anspruch 1, wobei das zweite untere Papier (11) eine Vielzahl von Schichten aufweist.

3. Alkalische Trockenbatterie gemäß Anspruch 2, wobei zumindest eine von der Vielzahl von Schichten eine Dünnschicht ist, die aus regenerierter Zellulose hergestellt ist.

4. Alkalische Trockenbatterie gemäß einem der vorangehenden Ansprüche, wobei der untere Separator (9) dünner als der zylindrische Separator (4) ist.

5. Alkalische Trockenbatterie gemäß einem der vorangehenden Ansprüche, wobei die Batteriegröße eine D-Größe ist.

## Revendications

1. Batterie sèche alcaline comprenant :
un boîtier (1) de batterie ;
un mélange (2) de matériaux d'électrode positive cylindrique creuse fixé à la partie intérieure dudit boîtier (1) de batterie ;
un séparateur cylindrique (4) disposé à l'intérieur dudit mélange (2) de matériaux d'électrode positive ;
un séparateur inférieur (9) disposé au niveau d'une extrémité dudit séparateur cylindrique (4) ; et
une électrode négative à gel (3) remplie à l'intérieur dudit séparateur cylindrique (4) et dudit séparateur inférieur (9) ;
où ledit séparateur inférieur (9) comprend un premier papier inférieur (10) et un deuxième papier inférieur (11) stratifié à l'extérieur dudit premier papier inférieur (10),
ledit premier papier inférieur (10) a une première partie inférieure (10a) et une première partie montante (10b) qui est placée autour de ladite première partie inférieure (10a) et verticalement le long de la partie intérieure dudit séparateur cylindrique (4),
ledit deuxième papier inférieur (11) a une deuxième partie inférieure (11a) et une deuxième partie montante (11b) qui est placée autour de ladite deuxième partie inférieure (11a) et verticalement le long de la partie extérieure dudit séparateur cylindrique (4), et
l'extrémité dudit séparateur cylindrique (4) est prise en sandwich entre ladite première partie montante (10b) et ladite deuxième partie montante (11b) ;
**caractérisée en ce que** ladite première partie montante (10b) a une hauteur de 1 à 5 mm, et ladite deuxième partie montante (11b) a une hauteur de 3 à 10 mm.

2. Batterie sèche alcaline selon la revendication 1, dans laquelle ledit deuxième papier inférieur (11) comprend une pluralité de couches.

3. Batterie sèche alcaline selon la revendication 2, dans laquelle au moins l'une de ladite pluralité de couches est un film mince fait de cellulose régénérée.

4. Batterie sèche alcaline selon l'une des revendications précédentes, dans laquelle ledit séparateur inférieur (9) est plus mince que ledit séparateur cylindrique (4).

5. Batterie sèche alcaline selon l'une des revendications précédentes, dans laquelle la taille de la batterie est une taille D.
